# EUROPÄISCHE PATENTSCHRIFT

(11) **EP 2 217 460 B1**
(45) Veröffentlichungstag und Bekanntmachung des Hinweises auf die Patenterteilung: **13.04.2011**
(21) Anmeldenummer: 08860715.5
(22) Anmeldetag: 11.11.2008
(51) Int. Cl.: B60G 17/02, B60G 15/06, B60G 11/52

(54) **FEDERBEIN MIT STELLHÜLSE**
SPRING STRUT WITH CONTROL SLEEVE
JAMBE DE FORCE A RESSORT DOTEE D'UNE DOUILLE DE REGLAGE

(30) Priorität: 12.12.2007 DE 102007059765
(43) Veröffentlichungstag der Anmeldung: 18.08.2010
(73) Patentinhaber: Bayerische Motoren Werke Aktiengesellschaft, 80809 München (DE)
(72) Erfinder: SEIDL, Josef, 84130 Dingolfing (DE)
(86) Internationale Anmeldenummer: PCT/EP2008/009485
(87) Internationale Veröffentlichungsnummer: WO 2009/074199

(56) Entgegenhaltungen:
- EP-A- 1 403 103
- EP-A- 1 681 188
- EP-A- 1 734 277
- DE-A1- 3 739 663
- DE-B3- 10 336 155
- DE-U1- 29 514 552
- GB-A- 752 284
- SU-A2- 1 017 851

## Beschreibung

Die Erfindung bezieht sich auf ein Federbein für ein Fahrzeugrad, insbesondere ein Rad eines Motorrades, wie es im Oberbegriff des Anspruchs 1 beschrieben ist.

Ein derartiges Federbein zeigt die NL 1029266. Insbesondere ist in den Fig. 10 bis 12 ein Federbein mit einer Schraubenfeder und einem dazu in Reihe geschaltetem Elastomerblock dargestellt. Der Elastomerblock ist so gestaltet, dass er wenigstens auf einem Teil seiner Länge einen Hohlraum zur äußeren Zylinderwand freilässt, und beim Zusammendrücken kann das Material des Elastomers in diesen Hohlraum hinein ausweichen. Eine konische Stellhülse lässt sich in den Hohlraum einschieben. Dadurch wird dem Elastomer je nach Einstelltiefe der Stellhülse zunehmend die Ausweichmöglichkeit genommen mit der Folge, dass seine Federhärte steigt.

Aus diesem Dokument und aus seinem Familien mitglied EP 1 734 277 A1 ist ein Federbein dargstellt mit vergleichbarem Aufbau dargestellt. Eine Stellhülse ist hier so ausgeführt, dass sie gegebenenfalls an einen verschiebbaren Federteller anstösst und den Elastomer vollständig blockiert. Er ist in dieser Stellung nicht mehr wirksam im Hinblick auf die Federeigenschaften des Federbeins.

Aufgabe der Erfindung ist es, ein gattungsgemäßes Federbein zu verbessern.

Die Aufgabe wird erfindungsgemäß mit den kennzeichnenden Merkmalen des Patentanspruchs gelöst.

Bei der Erfindung begrenzt die Stellhülse - wie im Stand der Technik - nicht nur zunehmend den Ausweichraum des Elastomerblocks, sondern schaltet ihn als Federelement vollständig aus, wenn sie soweit nach unten verstellt ist, dass sie gegen den verschiebbaren Federteller anschlägt. Auch erlaubt sie eine Stellung etwas oberhalb des Federtellers, in der der Elastomerblock anfänglich noch als Feder - wenn auch mit hoher Federkonstante - wirkt, sobald jedoch beim Einfedern des Federbeins der Federteller gegen die Unterkante der Stellhülse stößt, ist der Elastomerblock als zweites Federelement nicht mehr wirksam. Auf diese Weise lässt sich die Federkennlinie des Gesamtsystems Federbein in einem weiten Bereich gezielt einstellen.

Für ihre axiale Verlagerung ist die Stellhülse in vorteilhafter Weise außen am Zylindermantel des Dämpfungszylinders geführt. Dies kann in einfacher Weise durch eine Gewindeverbindung geschehen. Die Verstellkraft kann durch Hand oder mit einem bzw. elektrischen Stellantrieb vorgenommen werden.

Ein noch größerer Einstellbereich der Federkennlinie lässt sich erfindungsgemäß dadurch erreichen, dass der Anschlag, gegen den sich der Elastomerblock nach oben abstützt, axial verlagerbar ist. Damit kann eine mehr oder weniger große Vorspannung des Gesamtsystems eingestellt werden. Der Anschlag ist über eine Gewindeverbindung an der Stellhülse gelagert.

Um dem Elastomerblock sicher in seiner Position zu halten und zu verhindern, dass er sich beim Einfedern nach außen wölbt, umfasst wie im Stand der Technik ein Hülsenmantel den Elastomerblock.

Weitere vorteilhafte Ausgestaltungen der Erfindung ergeben sich aus der nachfolgenden Beschreibung und der dazu gehörenden Zeichnung. Darin sind dargestellt in
- Fig. 1: ein Federbein gemäß der Erfindung und
- Fig. 2: das gleiche Federbein mit vollständig eingefahrener Stellhülse.

Ein Federbein 1 ist Teil einer nicht weiter dargestellten Radaufhängung eines Fahrzeugrades, genauer eines Vorder- oder Hinterrads eines Motorrades. Derartige Federbeine sind allgemein bekannt, so dass sich die Darstellung in der Zeichnung lediglich auf die funktionellen Teile beschränkt.

Das Federbein 1 besteht aus einem Dämpfungszylinder 2, in dem ein Dämpfungskolben 3 geführt ist. Am Dämpfungskolben 3 greift eine nach außen führende Kolbenstange 4 an, die an ihrem frei liegenden Abschnitt ein Befestigungsauge 5 für das anzubringende Fahrzeugrad vorsieht. Mit einem ähnlichen Befestigungsauge 6 ist gegenüberliegend der Dämpfungszylinder 2 am Fahrzeugaufbau festgelegt.

Oberhalb seines Befestigungsauges 5 und außerhalb des Dämpfungszylinders 2 trägt die Kolbenstange einen Federteller 7, auf dem das untere Ende einer Schraubenfeder 8 aufliegt. Die Schraubenfeder 8 ist koaxial zum Dämpfungszylinder 2 ausgerichtet und ihre Windungen sind mit ausreichendem Abstand zur Zylinderaußenwand angeordnet. Außerdem erstreckt sich die Schraubenfeder 8 etwa bis zur Mitte der Längsausdehnung des Dämpfungszylinders 2. Dort stützt sich die Schraubenfeder 8 an der Unterseite eines weiteren Federtellers 9 ab, der wiederum auf der Zylinderaußenwand des Dämpfungszylinders 2 axial verschiebbar gelagert ist.

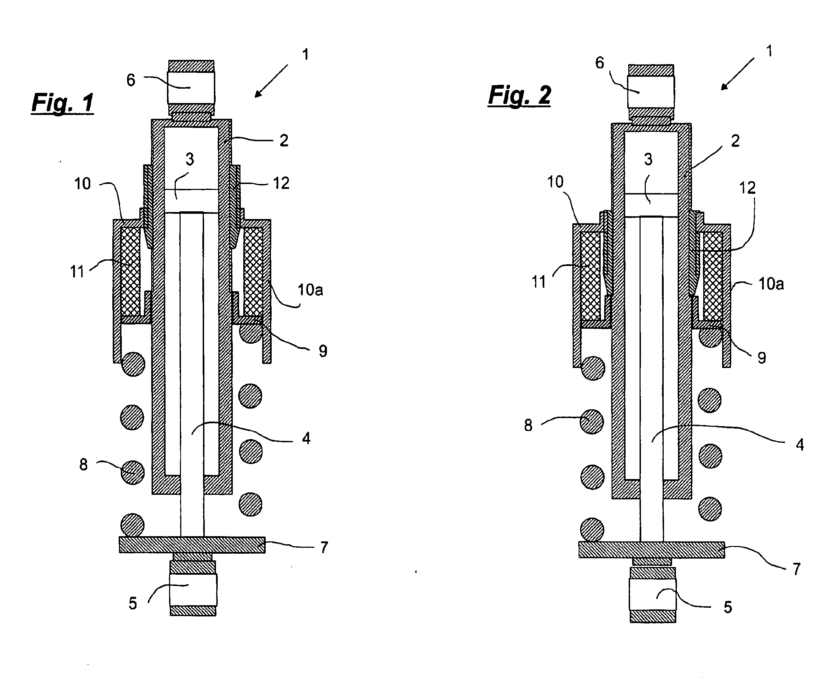

Zwischen der Oberseite des Federtellers 9 und einem Anschlag 10 ist ein als Federelement wirkender Elastomerblock 11 eingespannt, der auf diese Weise mit der Schraubenfeder 8 in Reihe geschaltet ist. Dabei ist der Elastomerblock 11 so dimensioniert, das sich zwischen seiner Innenwandung und der Außenwand des Dämpfungszylinders 2 ein Hohlraum ausbildet. Beim Einfedern des Federbeins wird die Schraubenfeder 8 und durch sie über den axial verschiebbaren Federteller 9 der Elastomerblock 11 gestaucht. Er kann dabei - wie noch weiter unter genauer dargestellt - nicht radial nach außen ausweichen und füllt deshalb zunehmend den Hohlraum zwischen ihm und der Zylinderaußenwand aus. Beim Ausfedern geht er aufgrund seiner Elastizität dann wieder die in Fig. 1 gezeigte Grundform zurück.

Eine Stellhülse 12 ist oberhalb des Hohlraums am Außenumfang des Dämpfungszylinders 2 axial verschiebbar geführt. Die Führung erfolgt durch ein Außengewinde auf dem Zylindermantel des Dämpfungszylinders 2, in das ein Innengewinde der Stellhülse 12 greift. Fig. 1 zeigt eine obere Endposition der Stellhülse 12, in der sie mit einem konisch angeformten Ende etwas in den Hohlraum hineinragt. In Fig. 2 ist die Stellhülse über die erwähnte Gewindeführung in eine untere Endposition verlagert. In dieser Position stößt sie am Federteller 9 an und schaltet dadurch den Elastomerblock 11 ab. Bei einer Einfederungsbewegung wird dann nur noch die Schraubenfeder 8 zusammengedrückt, die sich in diesem Fall über den Federteller 9 und die Stellhülse 12 am Gehäuse des Dämpfungszylinders 2 abstützt.

Zwischen der oberen und unteren Endposition lässt sich die Stellhülse 12 in jede andere Zwischenposition verlagert. Je nachdem wie tief sie dabei in den Hohlraum ragt, versperrt sie dem Elastomerblock 11 bei einem Einfederungsvorgang mehr oder weniger den Platz für seine Ausdehnung. Der Federblock 11 verändert dadurch seine Federrate und damit die Federrate des Gesamtsystems.

Um zu verhindern, dass der Elastomerblock 11 bei einem Einfederungsvorgang radial nach außen ausweicht, umgibt ihn an seinem Außenumfang ein Hülsenmantel 10a, der am Anschlag 10 angeformt und koaxial zum Dämpferzylinder 2 ausgerichtet ist.

Der Anschlag 10 selbst ist wiederum über ein Einstellgewinde mit der Steilhülse 12 verbunden. Damit lässt sich der Anschlag 10 axial nach oben oder unten verlagern und mit ihm die obere Federbasis des in Reihe geschalteten Federsystems aus Schraubenfeder 8 und Elastomerblock 11. Die Gesamtfedervorspannung lässt sich auf diese Weise zusätzlich verändern.

## Patentansprüche

1. Federbein (1) für ein Fahrzeugrad, insbesondere für das Rad eines Motorrades mit einem Dämpfungszylinder (2), in dem ein Dämpfungskolben (3) mit einer nach außen geführten Kolbenstange (4) verschiebbar ist und mit einem um den Dämpfungszylinder (2) angeordneten ersten Federelement, das sich einerseits an dem außen liegenden Ende der Kolbenstange und andererseits an einem entlang der Außenwand des Dämpfungszylinder (2) verschiebbaren Federteller (9) abstützt, sowie mit einem zweiten als Elastomerblock (11) ausgelegten Federelement, das sich auf dem verschiebbaren Federteller (9) und einem gegenüberliegenden Anschlag (10) abstützt, wobei der Elastomerblock (11) mit Abstand um die Zylinderwand des Dämpfungszylinders (2) angeordnet ist und sich in den **dadurch** gebildeten Hohlraum eine Stellhülse (12) einschieben lässt, die in einer unteren Position gegen den verschiebbaren Federteller (9) anstößt, **dadurch gekennzeichnet, dass** die Stellhülse (12) an ihrem Außenmantel eine Gewinde aufweist, in das ein Innengewinde des dem verschiebbaren Federteller (9) gegenüberliegenden Anschlags (10) für den Elastomerblock (11) eingreift.

## Claims

1. A shock-absorbing leg (1) for a vehicle wheel, especially a motorcycle wheel, comprising a damping cylinder (2) in which a piston (3) is movable on an outwardly directed piston rod (4), and a first spring element disposed around the damping cylinder (2) and abutting at one end against the outer end of the piston rod whereas the other end abuts a spring plate (9) movable along the outer wall of the damping cylinder (2), also comprising a second spring element in the form of an elastomer block (11) abutting the movable spring plate (9) and an opposite abutment (10), wherein the elastomer block (11) is disposed at a distance from and around the cylindrical wall of the damping cylinder (2) and an adjusting sleeve (12) is insertable into the resulting cavity and, when in a bottom position, abuts the movable spring plate (9), **characterised in that** on its outer surface the adjusting sleeve (12) has a thread for engaging an inner thread of the abutment (10) opposite the movable spring plate (9) for the elastomer block (11).

## Revendications

1. Jambe de force (1) pour une roue de véhicule, notamment une roue d'une moto comportant un cylindre amortisseur (2) dans lequel coulisse un piston amortisseur (3) avec une tige de piston (4) débouchant à l'extérieur et un premier élément de ressort autour du cylindre amortisseur (2), dont un côté s'appuie contre l'extrémité extérieure de la tige de piston et l'autre contre une coupelle à ressort (9) coulissant le long de la paroi extérieure du cylindre amortisseur (2), ainsi qu'un second élément de ressort sous la forme d'un bloc d'élastomère (11) qui s'appuie sur la coupelle de ressort (9), coulissante, et une butée (10) opposée à celle-ci,
- le bloc d'élastomère (11) entourant à une certaine distance la paroi cylindrique du cylindre amortisseur (2) et permettant l'insertion d'un manchon de réglage (12) dans la cavité ainsi formée, ce manchon venant buter dans sa position inférieure contre la coupelle à ressort (9), coulissante,
jambe de force **caractérisée en ce que**
le manchon de réglage (12) a un filetage sur son enveloppe extérieure dans lequel vient prendre le filetage intérieur de la butée (10) du bloc d'élastomère (11), butée en regard de la coupelle de ressort (9), coulissante.
